# EUROPEAN PATENT APPLICATION

(11) **EP 2 475 141 A1**
(43) Date of publication of application: **11.07.2012**
(21) Application number: 09848894.3
(22) Date of filing: 22.12.2009
(51) Int. Cl.: H04L 29/06

(54) **DATA TRANSMISSION METHOD AND APPARATUS FOR A WIRELESS DISTRIBUTION SYSTEM**

(30) Priority: 01.09.2009 CN 200910171635
(71) Applicant: ZTE Corporation, Shenzhen, Guangdong 518057 (CN)
(72) Inventor: LI, Yan, Guangdong 518057 (CN); WANG, Zhanli, Guangdong 518057 (CN); SUN, Wangqiang, Guangdong 518057 (CN)
(74) Representative: Onsagers AS
(86) International application number: PCT/CN2009/075847
(87) International publication number: WO 2011/026289

(57) **Abstract**

The present invention discloses a data transmission method and an apparatus for a wireless distribution system. The method comprises: receiving data by a wireless access point or a wireless repeater of the wireless distribution system (S202); determining a priority of the data (S204); and transmitting the data according to the determined priority (S206). The present invention achieves a technical effect of providing an optimum wireless resources configuration for the users.

## Description

### Technical field of the Invention

The present invention relates to the communications field, and in particular to a data transmission method and an apparatus for a Wireless Distribution System (WDS).

### Background of the Invention

In a network of the wireless distribution system, physical devices involve three apparatuses: a Wireless Access Point (Wireless Distribution System Access Point (WDS-AP) which is abbreviated as access point), a Repeater (Wireless Distribution System Access Repeater (WDS-Repeater) which is abbreviated as repeater), and a wireless station (STA). The repeater is located between the wireless access point and the wireless station; a wireless connection is established between the access point and the repeater by a WDS channel. When the repeater is located between the Access Point and the wireless station, data transmitted to the STA needs to first arrive at the repeater via the WDS channel, wherein the repeater, after having decrypted the message, re-encrypts the decrypted message and then forwards the same to the STA. The service stream transmitted to the STA first passes through a one-level wireless transmission, namely from the AP to the repeater, and then passes through a second wireless transmission from the repeater to the STA. This mode of adopting the two-level wireless transmission extends the distance of the wireless transmission.

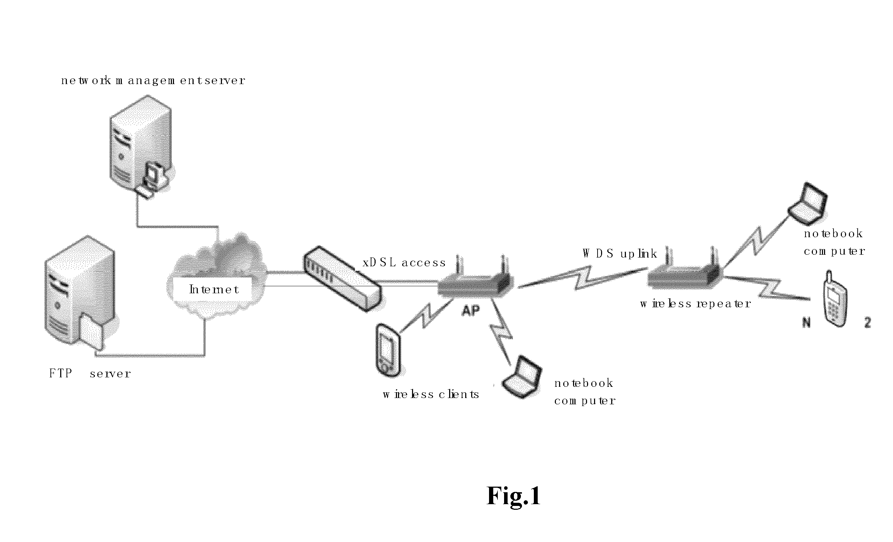

In a wireless local area network as shown in Fig. 1, a WDS connection is established between the wireless access point and the wireless repeater; and the WDS-Repeater connects multiple wireless stations (STAs) and accesses the Internet by a wired port at the WDS-AP side. The different wireless stations can operate different services, such as the wireless surfing, the wireless IPTV on demand/multicast services, the Wi-Fi telephone, the FTP download and so on. The wireless services of the different wireless users transmit in the same channel and share the wireless bandwidth.

In the related art, data transmission methods for the WDS transmit carried service streams by adopting a principle that the messages of the wireless services data are firstly transmitted if they firstly arrive, thus it causes that the transmission quality of the important services cannot be guaranteed under the circumstance that the bandwidth is limited, thereby affecting the user experience.

### Summary of the Invention

The object of the present invention is to provide a data transmission method and an apparatus for a wireless distribution system, which can solve the technical problem in the related art that the transmission quality of important services cannot be guaranteed and the user experience is affected.

A data transmission method for a wireless distribution system is provided according to one aspect of the present invention. The method comprises: receiving data by a wireless access point or a wireless repeater of the wireless distribution system; determining a priority of the data; and transmitting the data according to the determined priority.

Preferably, the step of determining the priority of the data comprises at least one of the following steps: determining the priority of the data by querying a preset priority list according to a type of the data; and determining the priority of the data according to a priority field carried in the data.

Preferably, the step of transmitting the data according to the determined priority comprises: the wireless access point placing the data in queues with different priorities according to the determined priority; and transmitting in turn the data in each of the queues to the wireless repeater according to the priority of the queue.

Preferably, the step of transmitting the data according to the determined priority comprises: the wireless repeater importing the data to queues with different priorities according to the determined priority; and transmitting in turn the data in each of the queues to the wireless access point according to the priority of the queue.

Preferably, the method further comprises: storing the data in the queue having a high priority; judging whether the transmission of the data in the queue having the high priority has failed; retransmitting the stored data if the transmission has failed; and deleting the stored data if the transmission is successful.

A data transmission apparatus for a wireless distribution system is further provided according to another aspect of the present invention. The apparatus comprises: a reception module, configured to receive data; a determination module, configured to determine a priority of the data; and a transmission module, configured to transmit the data according to the determined priority.

Preferably, the determination module comprises: a first query unit, configured to query a preset priority list according to a type of the data to obtain the priority corresponding to the type of the data; and a first determination unit, configured to determine the corresponding priority as the priority of the data.

Preferably, the determination module comprises: a second query unit, configured to query a priority field carried in the data; and a second determination unit, configured to determine the priority of the data according to the priority field.

Preferably, the transmission module comprises: an import unit, configured to import the data to queues with different priorities according to the determined priority; and a transmission unit, configured to transmit in turn the data in each of the queues according to the priority of the queue.

Preferably, the apparatus further comprises: a storage module, configured to store the data in the queue having a high priority; a judgment module, configured to judge whether the transmission of the data in the queue having the high priority is successful; a retransmission module, configured to retransmit the data when the judgment module judges that the transmission has failed; and a deleting module, configured to delete the data when the judgment module judges that the transmission is successful.

Preferably, the apparatus is arranged on a wireless access point or a wireless repeater.

By virtue of the above at least one technical solution of the present invention, it enables services having a high priority to be first transmitted by determining the priority of the data in a wireless access point or a wireless repeater and transmitting the data according to the determined priority, and it therefore solves the technical problem in the related art that the transmission quality of important services cannot be guaranteed and the user experience is affected when the bandwidth is limited, thereby achieving a technical effect of providing an optimum wireless resources configuration for the users.

### Brief Description of the Drawings

The drawings herein are used to provide a further understanding of the present invention and form a part of the specification, which are used to explain the present invention together with the embodiments of the present invention without unduly limiting the scope of the present invention. In the drawings:
Fig. 1 is a structural schematic diagram of a wireless network in the related art;
Fig. 2 is a flowchart of a data transmission method for a wireless distribution system according to the first embodiment of the present invention;
Fig. 3 is a block diagram of a data transmission apparatus for a wireless distribution system according to the second embodiment of the present invention; and
Fig. 4 is a flowchart of a data transmission method for a wireless distribution system according to the third embodiment of the present invention.

### Detailed Description of Embodiments

A detailed description is given to the preferred embodiments of the present invention with reference to the accompanying drawings. The preferred embodiment of the present invention is described for the purpose of illustration, not for limiting the present invention.

In the following description, for the purpose of explanation, several specific details will be described to provide the thorough understanding for the present invention. However, obviously, in the case that there is no these specific details, the present invention can also be implemented, and furthermore, the following embodiments and each detail in the embodiments can be carried out in various combinations under the circumstances that there is no conflict, namely under the circumstances of not departing from the spirit and scope illuminated by the appended claims.

### First embodiment

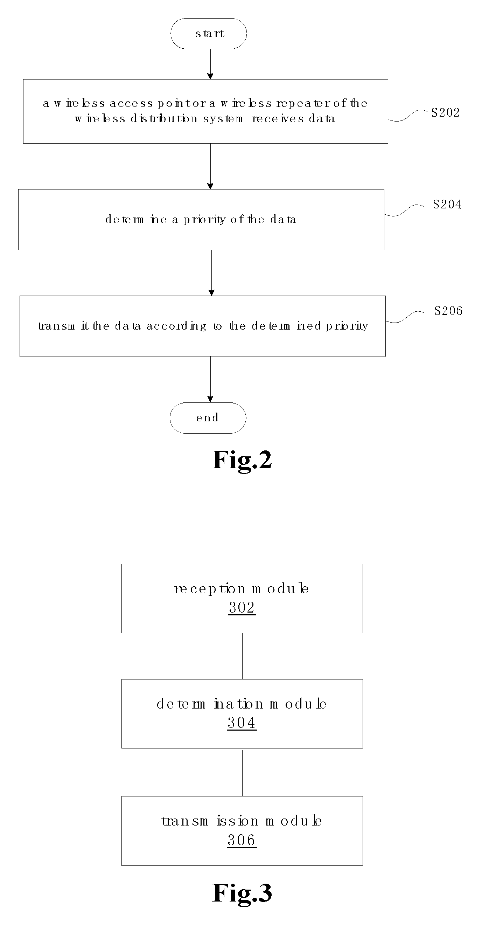

Fig. 2 is a flowchart of a data transmission method for a wireless distribution system according to the first embodiment of the present invention. As shown in Fig. 2, a data transmission method for a wireless distribution system according to the first embodiment of the present invention comprises:
step S202, a wireless access point or a wireless repeater of the wireless distribution system receiving data;
step S204, determining a priority of the data; and
step S206, transmitting the data according to the determined priority.

According to the data transmission method for the wireless distribution system in the first embodiment of the present invention, it enables services having a high priority to be first transmitted by determining the priority of the data in a wireless access point or a wireless repeater and by transmitting the data according to the priority, and therefore it solves the technical problem in the related art that the transmission quality of important services cannot be guaranteed and the user experience is affected when the bandwidth is limited, thereby achieving a technical effect of providing an optimum wireless resources configuration for the users.

Preferably, the step of determining the priority of the data comprises at least one of the following steps: determining the priority of the data by querying a preset priority list according to a type of the data; and determining the priority of the data according to a priority field carried in the data.

For example, service data such as the wireless surfing, the wireless IPVT on demand/multicast service, the Wi-Fi telephone and the FTP download etc. are classified into different priorities according to the service categories, and the priority of the data can also be determined according to the priority field such as a QoS mark carried in the data, or the priority of the data can also be determined by combining the above two modes.

Preferably, the step of transmitting the data according to the determined priority comprises: the wireless access point placing the data in queues with different priorities according to the determined priority; and transmitting in turn the data in each of the queues to the wireless repeater according to the priority of the queue.

The high priority transmission strategy, such as the time slice cycling strategy, the priority weighting strategy and the absolute priority strategy etc., may be used to transmit messages in the high priority queue preferentially from the wireless access point to the WDS interface, and then to transmit to the wireless repeater via the WDS channel.

Preferably, the step of transmitting the data according to the determined priority comprises: the wireless repeater importing the data to queues with different priorities according to the determined priority; and transmitting in turn the data in each of the queues to the wireless access point according to the priority of the queue.

The high priority transmission strategy such as the time slice cycling strategy, the priority weighting strategy and the absolute priority strategy etc., may be used to transmit messages in the high priority queue preferentially from the wireless repeater to the WDS interface, and then to transmit to the wireless access point via the WDS channel.

Preferably, the method further comprises: storing the data in the queue having the high priority; judging whether the transmission of the data in the queue having a high priority has failed; retransmitting the stored data if the transmission has failed; and deleting the stored data if the transmission is successful.

The data in the high priority queue may be retransmitted, while the data in the low priority queue will not be cached and retransmitted. Thus, the purpose of ensuring the transmission speed and quality of the data with the high priority and improving the user experience can be achieved.

The data transmission method for the wireless distribution system according to the first embodiment of the present invention solves the technical problem in the related art that the transmission quality of important services cannot be guaranteed and the user experience is affected when the bandwidth is limited, thereby achieving a technical effect of providing an optimum wireless resources configuration for the users.

### Second embodiment

Fig. 3 is a block diagram of a data transmission apparatus for a wireless distribution system according to the second embodiment of the present invention.

As shown in Fig. 3, a data transmission apparatus for a wireless distribution system according to the second embodiment of the present invention comprises: a reception module 302, configured to receive data; a determination module 304, configured to determine a priority of the data; and a transmission module 306, configured to transmit the data according to the determined priority.

According to the data transmission apparatus for the wireless distribution system in the second embodiment of the present invention, it enables services having a high priority to be first transmitted, by the way of receiving the data by the reception module and then determining the priority of the data by the determination module, and transmitting the data by the transmission module according to the determined priority, therefore it solves the technical problem in the related art that the transmission quality of important services cannot be guaranteed and the user experience is affected when the bandwidth is limited, thereby achieving a technical effect of providing an optimum wireless resources configuration for the users.

Preferably, the determination module comprises: a first query unit, configured to query a preset priority list according to a type of the data to obtain the priority corresponding to the type of the data; and a first determination unit, configured to determine the corresponding priority as the priority of the data.

Preferably, the determination module comprises: a second query unit, configured to query a priority field carried in the data; and a second determination unit, configured to determine the priority of the data according to the priority field.

For example, service data such as the wireless surfing, the wireless IPVT on demand/multicast service, the Wi-Fi telephone and the FTP download etc. are classified into different priorities according to the service categories, and the priority of the data can also be determined according to the priority field such as a QoS mark carried in the data.

Preferably, the transmission module comprises: an import unit, configured to import the data to queues with different priorities according to the determined priority; and a transmission unit, configured to transmit in turn the data in each of the queues according to the priority of the queue.

The high priority transmission strategy such as the time slice cycling strategy, the priority weighting strategy and the absolute priority strategy etc., may be used to transmit messages in the high priority queue preferentially to the WDS interface, and then to transmit to destination network elements via the WDS channel.

Preferably, the apparatus further comprises: a storage module, configured to store the data in the queue having a high priority; a judgment module, configured to judge whether the transmission of the data in the queue having the high priority is successful; a retransmission module, configured to retransmit the data when the judgment module judges that the transmission has failed; and a deleting module, configured to delete the data when the judgment module judges that the transmission is successful.

The data in the high priority queue may be retransmitted, while the data in the low priority queue will not be cached and retransmitted. Thus, the purpose of ensuring the transmission speed and quality of the date with the high priority and improving the user experience can be achieved.

Preferably, the apparatus is arranged on a wireless access point or a wireless repeater. During a downlink transmission, the apparatus may be assembled on the wireless access point, so as to perform the transmission for the data having transmitted to the wireless repeater according to the priority; and during an uplink transmission, the apparatus may be assembled on the wireless repeater, so as to perform the transmission for the data having transmitted to the wireless access point according to the priority.

The data transmission apparatus for the wireless distribution system according to the second embodiment of the present invention solves the technical problem in the related art that the transmission quality of important services cannot be guaranteed and the user experience is affected when the bandwidth is limited, thereby achieving a technical effect of providing an optimum wireless resources configuration for the users.

### Third embodiment

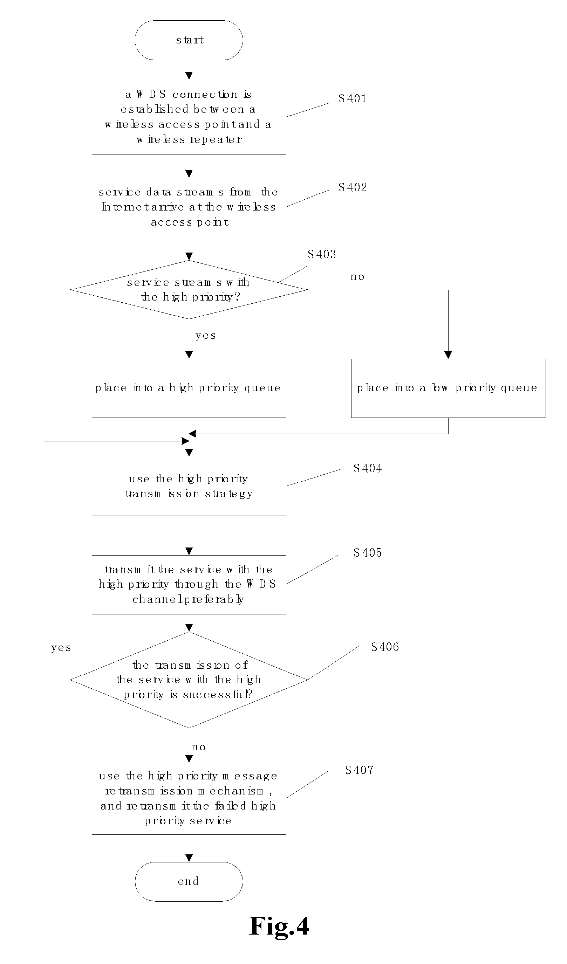

Fig. 4 is a flowchart of a data transmission method for a wireless distribution system according to the third embodiment of the present invention. As shown in Fig. 4, a data transmission method for a wireless distribution system according to the third embodiment of the present invention comprises the following steps.

Step S401: a WDS connection is established between a wireless access point and a wireless repeater.

Step S402: service data streams from the Internet arrive at the wireless access point.

Step S403: the service streams are classified according to the various categories of the service streams (such as the different QoS marks etc.) and placed into the different queues with the different priorities.

Step S404: the high priority transmission strategy (such as the time slice cycling strategy, the priority weighting strategy and the absolute priority strategy etc.) is used, messages in the high priority queue are preferentially transmitted to the WDS interface, and the message with the high priority is cached temporarily.

Step S405: the messages are transmitted to the repeater via the WDS channel, which ensures that the message with the high priority passes through the WDS channel preferably.

Step S406: for the message with the high priority, after the transmission ends, detect whether the transmission is successful.

Step S407: if the transmission of the message in the queue with the high priority has failed, then the retransmission strategy for the message with the high priority will be used. However, for the message in the queue with the low priority, the caching and the use of retransmission strategy etc. will not be performed.

The data transmission method for the wireless distribution system according to the third embodiment of the present invention solves the technical problem in the related art that the transmission quality of important services cannot be guaranteed and the user experience is affected when the bandwidth is limited, thereby achieving a technical effect of providing an optimum wireless resources configuration for the users.

In summary, the data transmission method and the apparatus for the wireless distribution system according to the present invention solves the technical problem in the related art that the transmission quality of important services cannot be guaranteed and the user experience is affected when the bandwidth is limited, thereby achieving a technical effect of providing an optimum wireless resources configuration for the users.

Obviously, those skilled in the art shall understand that the above modules and steps of the present invention can be realized by using general purpose calculating device, can be integrated in one calculating device or distributed on a network which consists of a plurality of calculating devices. Alternatively, the modules and steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall cover any modification, equivalent substitution and improvement within the spirit and principle of the present invention.

## Claims

1. A data transmission method for a wireless distribution system, **characterized by** comprising:
receiving data by a wireless access point or a wireless repeater of the wireless distribution system;
determining a priority of the data; and
transmitting the data according to the determined priority.

2. The method according to Claim 1, **characterized in that** the step of determining the priority of the data comprises at least one of the following steps:
determining the priority of the data by querying a preset priority list according to a type of the data; and
determining the priority of the data according to a priority field carried in the data.

3. The method according to Claim 1, **characterized in that** the step of transmitting the data according to the determined priority comprises:
the wireless access point placing the data in queues with different priorities according to the determined priority; and
transmitting in turn the data in each of the queues to the wireless repeater according to the priority of the queue.

4. The method according to Claim 1, **characterized in that** the step of transmitting the data according to the determined priority comprises:
the wireless repeater importing the data to queues with different priorities according to the determined priority; and
transmitting in turn the data in each of the queues to the wireless access point according to the priority of the queue.

5. The method according to Claim 3 or 4, **characterized in that** the method further comprises:
storing the data in the queue having a high priority;
judging whether the transmission of the data in the queue having the high priority has failed;
retransmitting the stored data if the transmission has failed; and
deleting the stored data if the transmission is successful.

6. A data transmission apparatus for a wireless distribution system, **characterized by** comprising:
a reception module, configured to receive data;
a determination module, configured to determine a priority of the data; and
a transmission module, configured to transmit the data according to the determined priority.

7. The apparatus according to Claim 6, **characterized in that** the determination module comprises:
a first query unit, configured to query a preset priority list according to a type of the data to obtain the priority corresponding to the type of the data; and
a first determination unit, configured to determine the corresponding priority as the priority of the data.

8. The apparatus according to Claim 6, **characterized in that** the determination module comprises:
a second query unit, configured to query a priority field carried in the data; and
a second determination unit, configured to determine the priority of the data according to the priority field.

9. The apparatus according to Claim 6, **characterized in that** the transmission module comprises:
an import unit, configured to import the data to queues with different priorities according to the determined priority; and
a transmission unit, configured to transmit in turn the data in each of the queues according to the priority of the queue.

10. The apparatus according to Claim 9, **characterized by** further comprising:
a storage module, configured to store the data in the queue having a high priority;
a judgment module, configured to judge whether the transmission of the data in the queue having the high priority is successful;
a retransmission module, configured to retransmit the data when the judgment module judges that the transmission has failed; and
a deleting module, configured to delete the data when the judgment module judges that the transmission is successful.

11. The apparatus according to Claim 6, **characterized in that** the apparatus is arranged on a wireless access point or a wireless repeater of the wireless distribution system.
